# EUROPÄISCHE PATENTSCHRIFT

(11) **EP 2 690 513 B1**
(45) Veröffentlichungstag und Bekanntmachung des Hinweises auf die Patenterteilung: **31.08.2016**
(21) Anmeldenummer: 12177587.8
(22) Anmeldetag: 24.07.2012
(51) Int. Cl.: G05B 19/4065, G05B 23/02

(54) **Condition-Monitoring bei einer Maschine, insbesondere bei einer Produktions- oder Werkzeugmaschine**
Condition monitoring for a machine, in particular a production machine or machine tool
Surveillance de l'état d'une machine, en particulier d'une machine-outil ou d'une machine de production

(43) Veröffentlichungstag der Anmeldung: 29.01.2014
(73) Patentinhaber: Siemens Aktiengesellschaft, 80333 München (DE)
(72) Erfinder: Bitterolf, David, 90518 Altdorf (DE); Bretschneider, Jochen, 73732 Esslingen (DE); Kubik, Alexander, 91058 Erlangen (DE); Schäfers, Elmar, 90763 Fürth (DE)

(56) Entgegenhaltungen:
- US-A1- 2003 147 351
- US-A1- 2004 236 450
- US-A1- 2005 154 542
- US-A1- 2008 161 959
- WAN JUN ET AL: "Intelligent tool failure monitoring for machining processes", TSINGHUA SCIENCE AND TECHNOLOGY, TSINGHUA UNIVERSITY PRESS, BEIJING, CN, Bd. 1, Nr. 2, 1. Juni 1996 (1996-06-01), Seiten 172-175, XP011376209, ISSN: 1007-0214, DOI: 10.1109/TST.1996.6077963

## Beschreibung

Die Erfindung betrifft ein Verfahren zum Condition-Monitoring einer programmgesteuerten Maschine, insbesondere einer Produktions- oder Werkzeugmaschine. Dabei ist unter einer Produktions- oder Werkzeugmaschine auch ein entsprechender Roboter zu verstehen.

Condition-Monitoring erlaubt die Überprüfung der Leistungsfähigkeit der Komponenten einer Maschine oder Anlage mit dem Ziel, eine Veränderung rechtzeitig zu erkennen, um in der Folge geeignete Maßnahmen einzuleiten. Beispiele hierfür sind der Tausch von verschleißbehafteten Maschinenkomponenten, wie z.B. einer Kugelrollspindel, in Abhängigkeit der tatsächlichen Belastung und nicht in Abhängigkeit von der Nutzungsdauer oder eines vorgegebenen Grenzwertes.

Während die strategische Bedeutung des Condition-Monitoring bekannt ist, scheitert der breite Einsatz, insbesondere im Bereich von Werkzeugmaschinen, zum einen an der Definition griffiger Kenngrößen, zum anderen auch an der Festlegung statischer oder dynamischer Grenzwerte, bei deren Überschreitung für den Praktiker zuverlässig eine signifikante Veränderung identifiziert wird. Aufgrund der nicht griffigen technischen Basis hat das Thema Condition-Monitoring daher noch keinen kommerziellen Durchbruch im Bereich der Werkzeugmaschinen erlangt.

Heutige Methoden des Condition-Monitoring von Antriebssystemen im Bereich der Werkzeugmaschinen konzentrieren sich auf die Analyse der Reibung, die Bestimmung der Kreisform, des Gleichlaufs oder anderer Lastmonitore mit Grenzwertüberwachung. Diese Methoden analysieren das Verhalten der Antriebssysteme der Werkzeugmaschine ausschließlich im Zeitbereich. Sie werden üblicherweise in festgelegten zeitlichen Abständen von einem Bediener gestartet und ausgeführt. Üblich sind wöchentliche Durchführungen solcher Tests. Es werden daher Veränderungen des Antriebssystems nur im Raster dieser zeitlichen Abstände erkannt. Weiterhin wird heute das Condition-Monitoring von Antriebssystemen im Bereich der Werkzeugmaschinen auf Basis spezieller Verfahrprogramme durchgeführt. Dies erfordert zusätzliche Nebenzeiten, in denen mit der betreffenden Maschine nicht produziert werden kann. Darüber hinaus arbeiten heute bekannte Verfahren des Condition-Monitoring im Zeitbereich und erfordern reproduzierbare Referenz-Verfahrprofile, die durch den Betreiber einer entsprechenden Maschine vorgegeben werden müssen, z.B. die Vorgabe einer Kreiskurve oder eines anders gearteten Verfahrprofils. Ein spezifisch vom Kunden definiertes Verfahrprofil führt im Frequenzbereich zu Anregungen, die von dem spezifischen Verfahrprofil abhängen. Dadurch muss jedoch eine bestimmte Resonanzfrequenz einer Maschinenachse nicht zwingend angeregt werden und sie wird dann bei der Analyse nicht sichtbar.

In der Regel werden heute beim Condition-Monitoring einer Werkzeugmaschine die Werkzeuge in der Luft bewegt, d.h., ohne eine reale Bearbeitung auszuführen. Es kann damit lediglich das Verhalten der Achsen, nicht jedoch das eines realen Bearbeitungsprozesses analysiert werden. Weiterhin lassen heutige Methoden des Condition-Monitoring bewegter Antriebssysteme im Bereich der Werkzeugmaschinen lediglich Abweichungen von einem Soll-Verhalten erkennen, ohne jedoch einen Grund für eine Abweichung von dem Soll-Verhalten aufzuzeigen. Eine automatisierte Analyse der Ursachen einer Abweichung vom Soll-Verhalten findet nicht statt. Stattdessen zeichnen bisherige Condition-Monitoring Systeme lediglich Daten auf und melden das Erreichen bzw. Überschreiten eines Grenzwertes. Die Auswertung der Messungen und die Schlussfolgerung, welche Mechanische Komponenten beispielsweise eine gemessene Amplitudenerhöhung verursacht haben, sind bisher nur im Nachgang durch einen erfahrenen Ingenieur möglich.

Schließlich sind heutige Methoden des Condition-Monitoring auf Analysen im Zeitbereich begrenzt. Mittels einer Frequenzgangsanalyse ließen sich dagegen Abweichungen leichter erkennen und beispielsweise kritische Resonanzfrequenzbereiche festlegen.

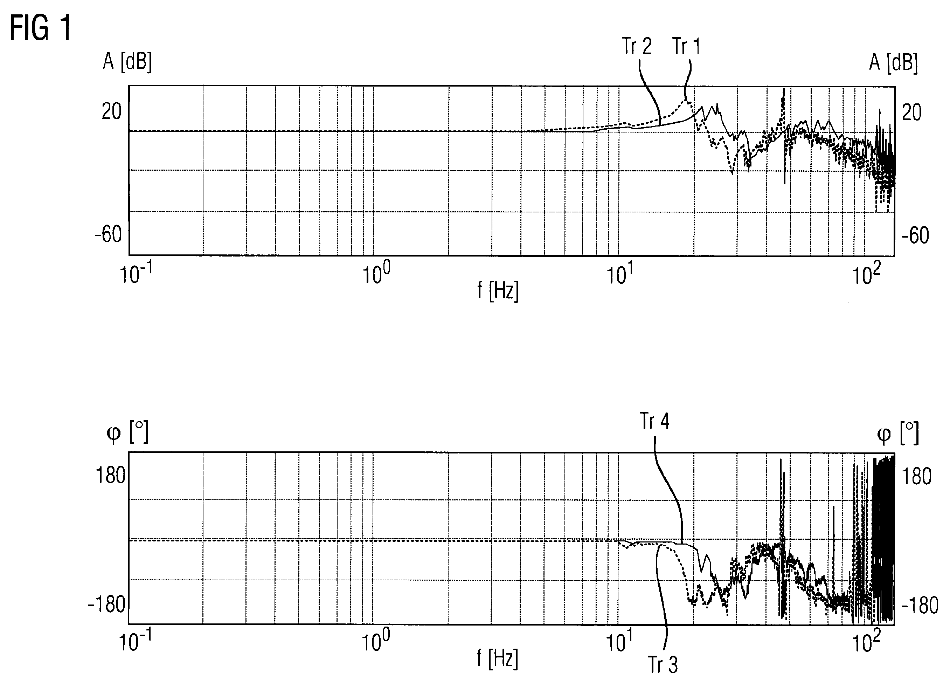

Mittels der bekannten numerischen Steuerung SINUMERIK 840D von Siemens ist es möglich, in einem Analysemodus eine Frequenzgangsanalyse im Frequenzbereich durchzuführen. Figur 1 veranschaulicht den Frequenzgang einer Werkzeugmaschinenachse, sowohl im ursprünglichen Zustand (durchgezogene Kennlinien Tr 2, Amplitudenfrequenzgang, bzw. Tr 4, Phasenfrequenzgang), als auch nach Lockerung einer Kugelrollspindel (punktierte Linien Tr 1 bzw. Tr 3). Aus Figur 1 ist erkennbar, dass sich Änderungen der Komponenteneigenschaften in dem Frequenzgang widerspiegeln. Um allerdings von der Änderung in dem betreffenden Frequenzgang auf die entsprechende Komponente schließen zu können, ist zusätzliches Expertenwissen erforderlich.

Aus H. Groß, J. Hamann, G. Wiegärtner: "Technik elektrischer Vorschubantriebe in der Fertigungs- und Automatisierungstechnik", Siemens-Verlag, ISBN 13: 978-3-89578-149-0, ISBN 10: 3-89578-149-5, Kap. 1.2.1, und D. Schröder: "Elektrische Antriebe, Regelung von Antriebssystemen", Springer-Verlag, ISBN 978-3-540-98612-8, Kapitel 19.1, 19.4, sowie aus Hans Dresig: "Schwingungen mechanischer Antriebssysteme: Modellbildung, Berechnung, Analyse, Synthese", Verlag: Springer, Berlin Heidelberg; Auflage: 1 (24. April 2001), ISBN-10: 3540416749, ISBN-13: 978-3540416746, ist bekannt, ein dynamisches Modell einer Maschine oder ein dynamisches Modell eines Teils einer Maschine, welches mehrere Komponenten der Maschine umfasst, zu erstellen, wobei das dynamische Modell Modell-Parameter wie Massenträgheiten, Federsteifigkeiten oder Dämpfungswerte umfasst. Die Erstellung des Modells beruht im ersten Schritt weitgehend auf Expertenwissen, wobei einzelne Parameter des Modells ausgehend von einem ersten Entwurf durch Optimierungsverfahren optimiert werden können. Ein möglicher Weg zur Optimierung basiert auf Frequenzanalysen der realen Maschine, wobei die Ergebnisse der Frequenzanalyse mittels bekannter Optimierungsverfahren, z.B. einem Least-squares-Verfahren (Minimierung der Summe der Fehlerquadrate), dazu verwendet werden, die Modell-Parameter derart zu optimieren, dass das Modell nach der Optimierung das reale Verhalten der Maschine besser widerspiegelt als vor der Optimierung.

Aus der Druckschrift WAN JUN et al: "Intelligent tool failure monitoring for machining processes", Tsinghua Science and Technology, Tsinghua University Press, Beijing, CN, 1996, pp. 172-175, ist eine Methode zum Erkennen der Werkzeug-Abnutzung einer Werkzeugmaschine bekannt. Dabei wird zunächst ein Modell des von der Maschine unter Verwendung des Werkzeugs durchgeführten Bearbeitungsprozesses generiert. Mittels Sensoren werden anschließend die zu den Modellparametern korrespondierenden realen Parameter des Prozesses gemessen. Die Messung wird von Zeit zu Zeit wiederholt und Veränderungen der Parameter registriert. Die Veränderung der Parameter gibt Aufschluss über die Werkzeugabnutzung.

Aus der Druckschrift US 2004/0236450 A1 ist eine Modellbasierte Diagnose von Maschinen bekannt, bei der zunächst ein Modell der Maschine generiert wird. Anschließend wird das Verhalten der realen Maschine mit dem Verhalten des Modells verglichen. Aus der Abweichung in dem Verhalten können Rückschlüsse über den Zustand der Maschine und die Wahrscheinlichkeit für einen Ausfall innerhalb eines bestimmten zukünftigen Zeitraums ermittelt werden.

Eine Aufgabe der vorliegenden Erfindung ist es, ein Verfahren sowie eine Steuerung zur Durchführung eines Condition-Monitoring anzugeben, durch die während der Durchführung des Condition-Monitoring zumindest weitgehend auf Expertenwissen verzichtet und dennoch zuverlässig auf den Zustand einer Maschine geschlossen werden kann.

Diese Aufgabe wird durch ein Verfahren mit den im Patentanspruch 1 angegebenen Verfahrensschritten gelöst. Ferner wird die Aufgabe durch eine Steuerung für eine Maschine gemäß Anspruch 14 gelöst.

Gemäß einem ersten Verfahrensschritt des erfindungsgemäßen Verfahrens wird zunächst ein dynamisches Modell der Maschine bzw. ein dynamisches Modell für wenigstens einen Teil der Maschine bereitgestellt. Das dynamische Modell umfasst dabei mehrere Komponenten der Maschine, die miteinander in Wechselwirkung stehen. Beispielsweise lässt sich als Teil einer Maschine eine Vorschubachse der Maschine durch ein dynamisches Modell beschreiben, welches als Komponenten einen Motor, eine Last, ein Bett (Grundplatte, Maschinengestell etc.) sowie mehrere mit dem Bett verbundene Massen umfasst, wobei in dem Modell die Steifigkeit der Verbindungen zwischen den einzelnen Komponenten durch Feder-Dämpfer-Elemente modelliert wird. Durch das Modell soll das dynamische Verhalten der Maschine simuliert werden, daher auch die Bezeichnung "dynamisches Modell". Es kann dabei auf bekannte Feder-Dämpfer-Masse-Modelle zur Beschreibung einzelner Maschinenkomponenten bzw. auf bekannte Methoden zur Bestimmung derartiger Modelle zurückgegriffen werden. Neben den Massen (Massenträgheiten) einzelner Komponenten der betreffenden Maschine spielen dabei noch die Federsteifigkeiten sowie die Dämpfungswerte der Feder-Dämpfer-Elemente als Modell-Parameter eine entscheidende Rolle. Es sind jedoch auch andere bzw. weitere Parameter denkbar. Die Modellbildung fußt heute hauptsächlich auf Expertenwissen. Ziel des ersten Verfahrensschrittes ist es, ein abgesichertes Ausgangsmodell der Maschine bzw. des Teils der Maschine zu einem bestimmten Zeitpunkt, z.B. dem Zeitpunkt der Inbetriebnahme, zu schaffen. Abgesichert heißt, ein Modell, bei dem sich die mittels des Modells simulierten Ergebnisse bezüglich des Verhaltens der Maschine nur innerhalb eines Toleranzbereiches von dem an der realen Maschine gemessenen Verhalten unterscheiden.

Im nächsten Verfahrensschritt wird zu einem späteren als dem oben im ersten Verfahrensschritt genannten Zeitpunkt in bekannter Weise eine Frequenzanalyse für die Maschine oder den Teil der Maschine durchgeführt. Insbesondere werden der Amplitudengang und/oder der Phasengang in Folge einer bestimmten Anregung ermittelt.

Anschließend wird für wenigstens einen Parameter des dynamischen Modells (Modell-Parameter) ein neuer Wert auf Basis der Frequenzanalyse bestimmt. Auch dabei kann auf bekannte Verfahren zurückgegriffen werden, wie sie beispielsweise zur Optimierung eines Modells bei der Modellbildung verwendet werden. Zum Beispiel betrifft bei einem Feder-Dämpfer-Masse-Modell einer Vorschubachse einer Werkzeugmaschine ein derartiger Parameter die Steifigkeit eines Kugelgewindetriebs, der ein Bett (Grundplatte) mit einer Last der Maschine verbindet. Durch das Optimierungsverfahren werden prinzipiell die Modell-Parameter so angepasst, dass das derart geänderte Modell auf eine bestimmte Anregung wieder das gleiche Verhalten zeigt wie die reale Maschine. Aus einem Vergleich des aktuellen Modells (genauer: der aktuellen Parameter-Werte) mit dem ursprünglichen Modell (genauer: den ursprünglichen Parameter-Werten) lässt sich so in einfacher Weise nicht nur erkennen, ob sich an der Maschine etwas verändert hat, sondern es wird - im Falle einer Veränderung - auch die Information darüber geliefert, welcher Parameter-Wert sich geändert hat. Dies wiederum gibt Aufschluss darüber, an welcher Stelle oder in welchem Bereich der realen Maschine eine Veränderung vorliegt. Ein möglicher Fehler lässt sich dadurch viel schneller und genauer eingrenzen, als dies beispielsweise bei einer Auswertung auf Basis einer reinen Frequenzanalyse der Fall wäre.

In einem weiteren Verfahrensschritt wird der neue Wert des Modell-Parameters mit einem ursprünglichen Wert des Modell-Parameters verglichen. Insbesondere wird die Differenz zwischen den beiden Werten festgestellt. So kann beispielsweise ermittelt werden, ob sich die Abweichung innerhalb oder außerhalb eines üblichen und vorgebbaren Toleranzbereiches befindet. Besonders vorteilhaft werden der oder die Parameter, bei denen es zu signifikanten Abweichungen im Vergleich zum ursprünglichen Wert oder einem anderen Referenzwert kommt, besonders hervorgehoben. Beispielsweise kann die Darstellung auf einem Display in einer besonderen Farbe (z.B. rot) oder mit besonderen Effekten (z.B. blinkend) dargestellt werden. Damit wird für einen Bediener einer entsprechenden Maschine eine Problemstelle sofort sichtbar. Infolge einer bestimmten Abweichung der Werte können auch automatisch weitere Aktionen, z.B. ein Alarm, ausgelöst werden.

Vorteilhaft kann anhand des Vergleichsergebnisses der Werte wenigstens eines Parameters zu unterschiedlichen Zeitpunkten ein bestimmter Zustand der Maschine oder des Teils der Maschine erkannt werden. Insbesondere kann festgestellt werden, ob sich die Maschine noch in einem ordnungsgemäßen Zustand befindet, der einen bestimmungsgemäßen Gebrauch gewährleistet, oder ob ein bestimmungsgemäßer Gebrauch nicht mehr gewährleistet ist, oder ob ein bestimmungsgemäßer Gebrauch für bestimmte Funktionen nicht mehr, für andere aber schon noch gewährleistet ist, oder ob bereits Verschleißerscheinungen erkennbar sind, die zwar noch den bestimmungsgemäßen Gebrauch erlauben, jedoch bestimmte Maßnahmen (z.B. eine Wartungs-Aufforderung) einleiten, usw.

Ein Grundgedanke der Erfindung beruht demnach darauf, zuerst mittels bekannter Methoden ein abgesichertes Ausgangsmodell der Maschine bzw. eines Teils einer Maschine zu schaffen. Unter der Annahme, dass während des Betriebs der Maschine auftretende Änderungen typischerweise graduell passieren (z.B. Verschleiß), kann jede weitere Identifikationsrechnung automatisiert erfolgen. Das heißt, es können die gleichen oder gleichartige Optimierungsverfahren, die ursprünglich zur Schaffung des Ausgangsmodells verwendet wurden, verwendet werden, um dann Veränderungen an der Maschine über einen bestimmten Zeitraum feststellen zu können.

Das verwendete Optimierungsverfahren, z.B. ein Least-squares-Verfahren (Minimierung der Summe der Fehlerquadrate), hat beispielsweise zum Ziel, die Summe der Fehlerquadrate zu minimieren. Als Fehler wird die Differenz zwischen den simulierten Kurvenpunkten und den gemessenen Punkten herangezogen. Die Modell-Parameter werden gezielt variiert, um die simulierte Systemantwort mit der Gemessenen in Deckung zu bringen. Ergebnis daraus sind neue Modell-Parameter, die die aktuell gemessene Systemantwort möglichst gut approximieren. Die Anwendung eines Optimierungsverfahrens zur Streckenidentifikation ermöglicht somit das automatische Erstellen eines Modells für den aktuellen Maschinenzustand und daraus resultierend eine automatische Bestimmung der Änderung physikalischer Parameter. Welches Optimierungsverfahren konkret genutzt wird, ist für die Erfindung von untergeordneter Bedeutung. Es kann auch ein anderes als das hier beispielhaft genannte Least-squares-Verfahren sein. Wichtig ist das Ergebnis, nämlich die damit ermittelten Parameter-Werte.

Das erfindungsgemäße Verfahren bietet den Vorteil, dass das benötigte Expertenwissen bereits bei oder vor der Inbetriebnahme einer Maschine bzw. beim Einrichten des Condition-Monitoring einmalig in einem mathematischen Modell hinterlegt werden kann. Nach der Inbetriebnahme kann dann ohne weiteren Einsatz von Expertenwissen direkt auf den aktuellen Zustand einer bestimmten Komponente der Maschine bzw. der gesamten Maschine zurückgeschlossen werden. Durch die erfindungsgemäße Anwendung des Optimierungsverfahrens wird ein neues, gegenüber dem ursprünglichen Modell verändertes Modell der Maschine bestimmt, das den aktuellen Zustand der Maschine widerspiegelt. Insbesondere aus dem Vergleich der beiden Modelle wird es möglich, Problemstellen der Maschine bzw. Defekte relativ genau einzugrenzen und zu lokalisieren, was mit einer reinen Frequenzanalyse so nicht möglich wäre.

Bei einer vorteilhaften Ausführungsform der Erfindung handelt es sich bei dem Programm, während dem die Frequenzanalyse zur Bestimmung des Parameter-Wertes durchgeführt wird, um das Ablaufprogramm für den normalen Betrieb der Maschine, z.B. das Teileprogramm einer Werkzeugmaschine. Dies hat den Vorteil, dass die Erstellung eines eigenen Messprogramms nicht erforderlich ist und das Condition-Monitoring während des normalen Betriebs der Maschine erfolgt.

Vorteilhaft handelt es sich bei dem Programm zur Frequenzanalyse jedoch um ein spezielles Messprogramm, welches gezielt für die Frequenzanalyse ausgeführt wird und hierfür besonders geeignet ist. Dadurch wird insbesondere sichergestellt, dass alle im Zusammenhang mit der Maschine relevanten Frequenzen für die Frequenzanalyse angeregt werden. Vorzugsweise wird während des Ablaufs des Messprogramms die Ausführung eines Teileprogramms unterbunden.

Auch eine Kombination der beiden vorgenannten Möglichkeiten ist möglich. So kann dem normalen Ablaufprogramm ein spezielles Messprogramm zur Frequenzanalyse überlagert werden. Das Messprogramm wird dabei also parallel (zeitgleich) mit dem Ablaufprogramm ausgeführt. Dadurch muss der normale Betrieb der Maschine für die Messung nicht unterbrochen werden und es können - unabhängig von dem Ablaufprogramm - trotzdem alle relevanten Frequenzen angeregt werden.

Vorzugsweise erfolgt die Frequenzanalyse kontinuierlich während der Abarbeitung des Ablaufprogramms, so dass ein Problem an der Maschine sofort erkannt wird.

Es ist jedoch auch möglich, dass die Frequenzanalyse zu bestimmten, insbesondere fest vorgegebenen Zeitpunkten erfolgt. Durch eine entsprechende Vorgabe dieser Zeitpunkte kann darauf Einfluss genommen werden, wie schnell ein möglicher Fehler erkannt werden kann.

Bei einer bevorzugten Ausführungsform der Erfindung wird das dynamische Modell der Maschine in einer der Maschine fest zugeordneten Steuerung (der numerischen Steuerung der Maschine) hinterlegt und auch die Aktualisierung der Modell-Parameter erfolgt vorzugsweise durch die betreffende Steuerung. Somit bilden die Steuerung und die Maschine eine Einheit, die weitgehend autonom betreibbar ist.

Eine andere Ausführungsform der Erfindung sieht vor, dass das dynamische Modell in einem mit der Maschine über ein Netzwerk verbundenen Speicher zur Speicherung von Modellen für eine Vielzahl von Maschinen hinterlegt ist. Dies spart Speicherplatz vor Ort an der Maschine und erleichtert eine gegebenenfalls erforderliche Aktualisierung des Maschinenmodells. Diese Ausführungsform bietet den Vorteil, dass in einfacher Weise ein Vergleich der Parameter zwischen baugleichen Maschinen erfolgen kann. Auch dies trägt dazu bei, dass Fehler bei einer bestimmten Maschine schnell und zuverlässig erkannt werden können.

Bei einer Ausführungsform der Erfindung wird ein neuer Wert eines Modell-Parameters mittels eines Optimierungsverfahrens für Modelle ermittelt. Dies hat den Vorteil, dass auf bereits bekannte Algorithmen zurückgegriffen werden kann.

Bei einer Ausführungsform der Erfindung erfolgt die Frequenzanalyse lediglich für einen einem bestimmten, insbesondere eng begrenzten Frequenzbereich, für den verstärkt Probleme erwartet werden.

Vorteilhaft wird jedoch im Zusammenhang mit der Erfindung in Bezug auf einen Modell-Parameter eine breitbandige Frequenzgang-Analyse durchgeführt, so dass Werte für den Parameter unter Anregung der Maschine über ein breites Frequenzspektrum verfolgt werden. Dies gewährleistet eine weitgehend lückenlose Beobachtung des Parameters, eventuell auch für Frequenzbereiche, die bei "normalen" Ablaufprogrammen nicht durchlaufen werden. Vorzugsweise wird zur Anregung ein Rauschsignal verwendet.

Die Frequenzanalyse und/oder die Bestimmung eines neuen Wertes des Modell-Parameters erfolgen vorzugsweise im Frequenzbereich. Evtl. müssen hierzu von der Steuerung entsprechende Frequenztransformationen (z.B. mittels FFT) durchgeführt werden.

Eine Steuerung für eine Maschine, z.B. eine CNC- Steuerung (Computerized Numerical Control) zur Durchführung eines erfindungsgemäßen Verfahrens umfasst vorteilhaft wenigstens eine Speichereinrichtung zur Speicherung eines dynamischen Modells der Maschine, eine Recheneinrichtung sowie einen darauf lauffähigen Algorithmus zur Berechnung von Parameter-Werten des dynamischen Modells, insbesondere unter Erfassung und Auswertung von Sensor-Signalen, und eine Vergleichseinrichtung zum Vergleich der berechneten Parameter-Werte mit zuvor berechneten Parameter-Werten. Vorzugsweise ist die Steuerung zur Ausgabe von Informationen bezüglich des Vergleichsergebnisses ausgebildet. Dabei kann es sich beispielsweise um eine Anzeige an einem Display handeln, dass Wartungsarbeiten an einer Kugelrollspindel auszuführen sind.

Die Erfindung wird nachfolgend anhand von Ausführungsbeispielen näher erläutert. Es zeigen:
- FIG 1: bereits eingangs erläuterte Frequenzspektren,
- FIG 2 - 4: die Frequenzinhalte zweier Positioniervorgänge mit unterschiedlichen Beschleunigungen,
- FIG 5: ein Feder-Dämpfer-Masse-Modell einer Vorschubachse,
- FIG 6: den Frequenzgang eines Modells im Vergleich zu einem real gemessenen Frequenzgang, und
- FIG 7: ein Ablaufdiagramm zur Durchführung eines erfindungsgemäßen Verfahrens.

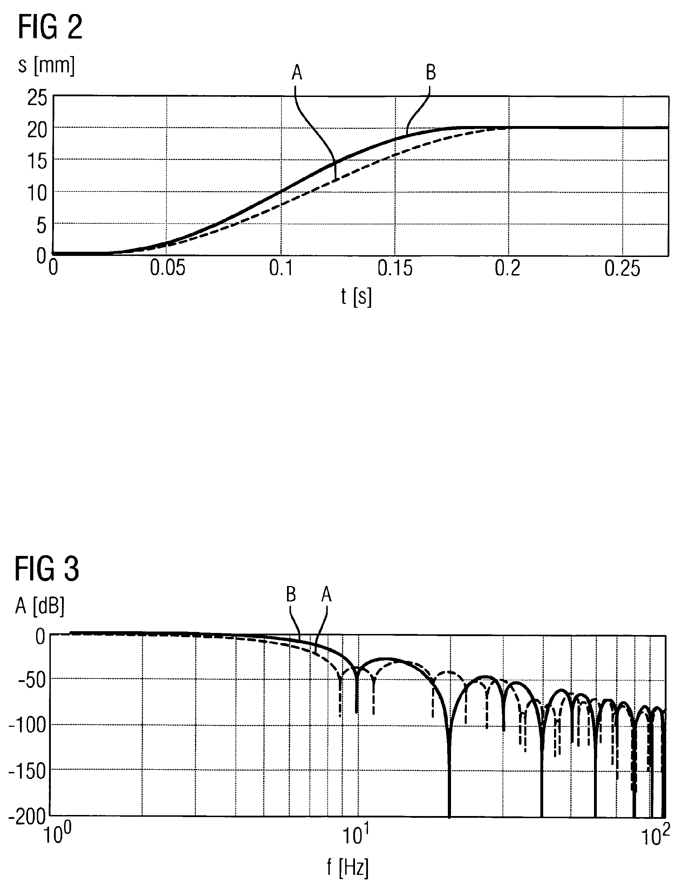

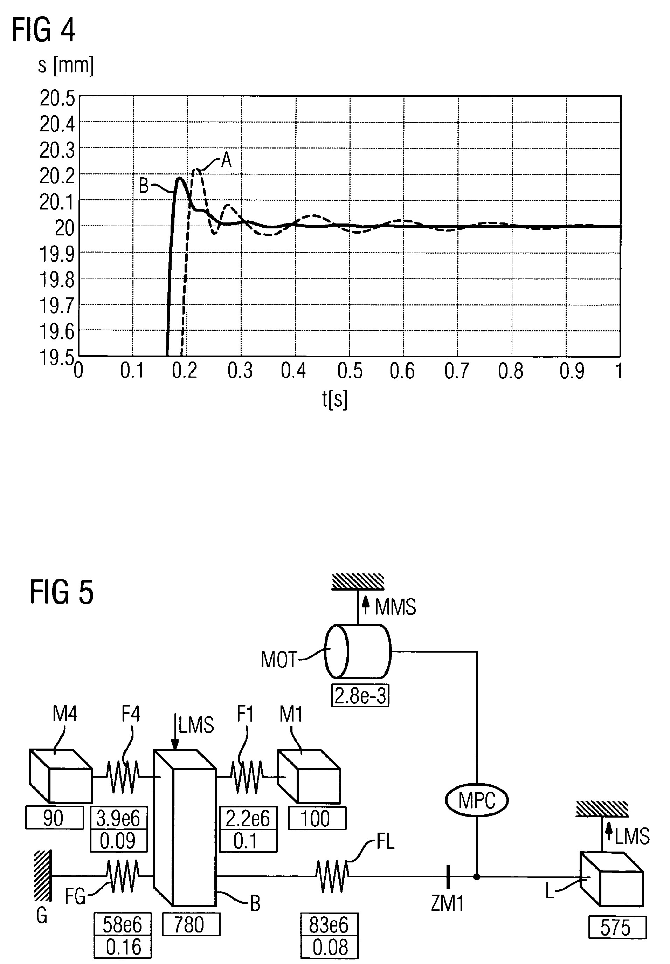

Die Figuren 2 bis 4 veranschaulichen eine Frequenzanalyse zweier Positioniervorgänge mit unterschiedlichen Beschleunigungen für eine Vorschubachse einer Werkzeugmaschine. Zunächst sind in Figur 2 eine Verfahrkurve A (gestrichelte Linie) mit einer Beschleunigung von 2 m/s² sowie die Verfahrkurve B (durchgängige Linie) mit einer Beschleunigung von 4 m/s² in Form des Weges über der Zeit dargestellt. Figur 3 zeigt die durch die unterschiedlichen Verfahrkurven angeregten Frequenzen. Aus dem Frequenzdiagramm wird ersichtlich, dass die Frequenz 20 Hz mit der Fahrkurve B (durchgängige Linie) nicht angeregt wird. Figur 4 veranschaulicht (im Zeitbereich) die Antwort einer Achse, deren erster Mode bei der Frequenz 20 Hz liegt, im Bereich des Sollwertes für den Verfahrweg. Deutlich ist für die Verfahrkurve A (gestrichelte Linie) das Schwingungsverhalten mit der Frequenz 20 Hz erkennbar (aus dem zeitlichen Abstand der Maxima und Minima), während sich die Resonanzfrequenz bei 20 Hz aus der Verfahrkurve B nicht abzeichnet.

Insgesamt zeigen die Figuren 2 bis 4, dass bei fest vorgegebenen Verfahrkurven nicht immer alle Resonanzstellen angeregt werden und diese daher evtl. bei einem Condition-Monitoring unerkannt bleiben. Dies kann dadurch vermieden werden, dass eine Frequenzanalyse mit einem fest vorgegebenen Frequenzbereich erfolgt, für den die Anregung stattfindet.

Figur 5 zeigt ein Feder-Dämpfer-Masse-Modell einer Vorschubachse einer bestimmten Maschine. Mittels eines derartigen Modells lässt sich in vielen Fällen das dynamische Verhalten einer Vorschubachse nachbilden, in guter Übereinstimmung mit dem realen Verhalten.

In dem Feder-Dämpfer-Masse-Modell gemäß dem Ausführungsbeispiel hat ein Bett B (Grundplatte, Gestell) eine (translatorische) Massenträgheit von 780 kg. Zwischen dem Bett B und dem Grund G befindet sich ein Feder-Dämpfer-Element FG (zur Erhöhung der Übersichtlichkeit werden Feder-Dämpfer-Elemente in der Figur nur mit dem Feder-Symbol gezeichnet), bei dem der Wert der Federsteifigkeit 58e6 und der Dämpfungswert 0.16 beträgt. Weiterhin ist das Bett B noch mit den Massen M1 und M4 verbunden. Zwischen dem Bett B und der Masse M1 befindet sich ein Feder-Dämpfer-Element F1 mit einem Wert für die Federsteifigkeit von 2.2e6 und einem Dämpfungswert von 0.1, und zwischen dem Bett B und der Masse M4 befindet sich ein Feder-Dämpfer-Element F4 mit einem Wert der Federsteifigkeit von 3.9e6 und einem Dämpfungswert von 0.09. Ferner befindet sich zwischen dem Bett B und der Last L ein Feder-Dämpfer-Element FL mit einem Wert der Federsteifigkeit von 83e6 und einem Dämpfungswert von 0.08. Weiterhin befindet sich zwischen dem Bett B und der Last L eine (masselose) Zwischenmasse ZM1. Weiterhin umfasst das Modell einen Motor MOT, dessen (rotatorische) Massenträgheit 2.8e-3 kg/m² beträgt. Die Anbindung des Motors MOT an das übrige Modell erfolgt über ein Umrechnungselement MPC (Multi Point Constraint). Ferner umfasst das Feder-Dämpfer-Masse-Modell gemäß dem Ausführungsbeispiel noch ein Motor-Messsystem MMS, z.B. einen Drehzahlgeber, sowie ein Lastmesssystem LMS, z.B. einen Drehgeber oder einen Streckensensor. Das Lastmesssystem LMS hat einen Referenzpunkt am Bett B. Steifigkeitseigenschaften von zu beobachtenden Komponenten bilden sich in dem Modell ab.

In Figur 5 wird die Steifigkeit des Antriebssystems im Wesentlichen durch die Steifigkeit des Feder-Dämpfer-Elements FL charakterisiert. Die Aufstell-Steifigkeit ist in dem Modell vor allem durch das Feder-Dämpfer-Element FG gekennzeichnet. Das Feder-Dämpfer-Masse-Modell gemäß Figur 5 beruht weitgehend auf Expertenwissen (zum Entwurf des Modells) in Verbindung mit rechnerischen Optimierungsverfahren zur Optimierung.

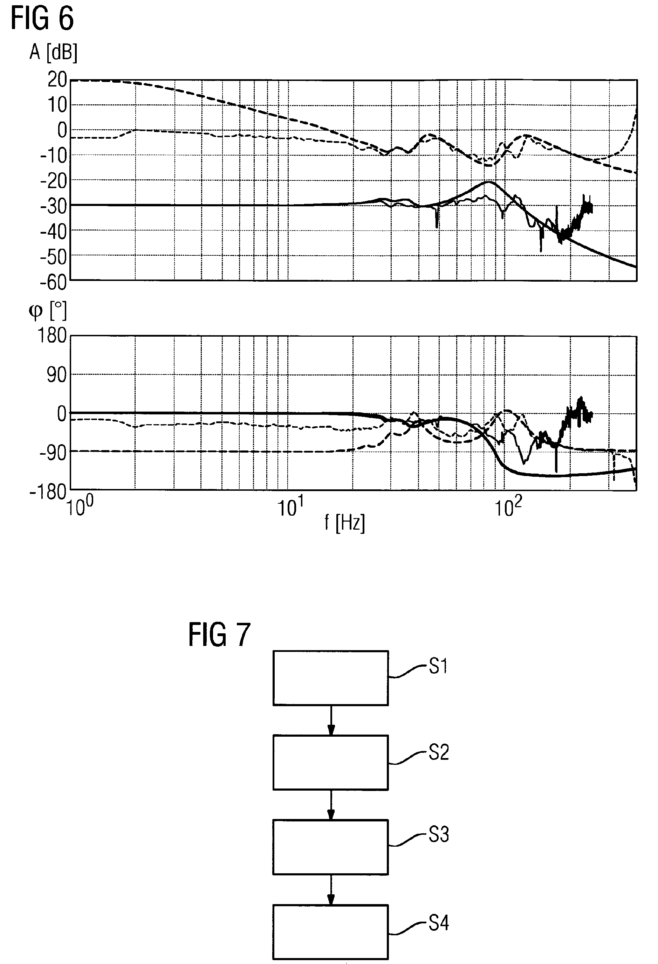

Figur 6 zeigt die gute Übereinstimmung eines solchen Modells mit Frequenzgangs-Messungen, die an der betreffenden realen Maschine gemacht wurden. Insbesondere zeigt Figur 6 im oberen Schaubild die Amplitudenfrequenzgänge der Regelstrecke im Modell (dick gestrichelte Kennlinie) sowie die zugehörige gemessene Kennlinie (dünn gestrichelte Kennlinie) und den Mechanikfrequenzgang im Modell (dicke durchgezogene Kennlinie) sowie die dazugehörige gemessene Kennlinie (dünne durchgezogene Kennlinie). Im unteren Schaubild sind die entsprechenden Phasengänge dargestellt. Durch eine Änderung der Antriebsstrang-Steifigkeit bzw. der Aufstellbedingungen wären Frequenzverschiebungen insbesondere im Frequenzbereich zwischen 20 Hz und 100 Hz zu erwarten. Somit lässt sich anhand aktueller Messdaten die Eigenschaft einer kritischen Komponente ermitteln. Würde sich beispielsweise für die Achse aus Figur 5 die Steifigkeit des Kugelgewindetriebes (FL) vermindern, so würden sich die in Figur 6 aufgezeigten charakteristischen Frequenzen verschieben und damit würde sich der Frequenzgang entsprechend verändern. Weiterhin würde dann bei der Ausführung des erfindungsgemäßen Verfahrens der Wert der verminderten Steifigkeit bestimmt werden. Wäre der Grund dafür die Änderung der Aufstellbedingungen der Maschine, käme dies im dafür vorgesehenen Parameter zum Ausdruck. Hat sich jedoch in den Aufstellbedingungen nichts geändert, so wäre die ermittelte verminderte Steifigkeit ein deutlicher Hinweis auf ein Problem an der Maschine.

Zusammenfassend gilt: Liegt ein Modell vor, welches das Verhalten einer Achse einer Maschine während der Abarbeitung eines Programms, d.h. während des normalen Betriebs, charakterisiert, so ist aufgrund der Messdaten, die während der Abarbeitung des Programms gewonnen werden, ein Update der Modell-Parameter möglich. Beinhaltet das Modell Parameter, die Rückschlüsse auf den Zustand einer Komponente der Maschine schließen lassen, so ist daraus auch eine Diagnose dieser Komponente ableitbar. Beispielsweise ermöglicht die Differenz zwischen der Bearbeitungskraft des Motors und der des direkten Messsystems die Berechnung der dazwischen liegenden Steifigkeit, wobei die Bearbeitungskraft des Motors aus dessen Stromaufnahme bestimmbar ist.

Figur 7 veranschaulicht die Vorgehensweise bei der Durchführung eines erfindungsgemäßen Verfahrens. Dabei wird zum Condition-Monitoring einer programmgesteuerten Maschine, insbesondere einer Produktions- oder Werkzeugmaschine, in einem ersten Verfahrensschritt S1 zunächst ein dynamisches Modell der Maschine oder ein dynamisches Modell eines Teils der Maschine, welches mehrere Komponenten der Maschine umfasst, bereitgestellt, wobei das dynamische Modell Modell-Parameter wie Massenträgheiten, Federsteifigkeiten oder Dämpfungswerte umfasst. Das bereitgestellte Modell beruht weitgehend auf Expertenwissen, wobei die Modell-Parameter vorzugsweise durch Optimierungsverfahren optimiert worden sind, so dass das dynamische Verhalten der realen Maschine zu einem bestimmten Zeitpunkt, z.B. der Inbetriebnahme der Maschine, in guter Näherung durch das Modell simulierbar ist.

Die folgenden Verfahrensschritte sollen nun nicht dazu dienen, das ursprünglich (im ersten Verfahrensschritt) erzeugte Modell der Maschine weiter zu optimieren, sondern dazu, dass Änderungen der Maschine während des der Inbetriebnahme nachfolgenden Betriebs erkannt werden. Hierfür werden im Prinzip zunächst die gleichen Verfahrensschritte wie bei der Optimierung des ursprünglichen Modells ausgeführt. So wird in einem Verfahrensschritt S2 eine Frequenzanalyse für die Maschine oder den Teil der Maschine durchgeführt und in einem Verfahrensschritt S3 wird anhand des Ergebnisses der Frequenzanalyse für wenigstens einen Modell-Parameter ein neuer Wert bestimmt. Anschließend wird jedoch in einem Verfahrensschritt S4 nicht einfach der ursprüngliche Parameter durch den neuen ersetzt (wie dies bei der Optimierung der Fall wäre), sondern es erfolgt ein Vergleich des neuen Wertes des Modell-Parameters mit einem ursprünglichen Wert des Modell-Parameters, insbesondere dem ursprünglichen Wert des Parameters zum Zeitpunkt der Inbetriebnahme der Maschine oder dem Start des Condition-Monitoring. Aus dem Vergleich des ursprünglichen Wertes des Parameters mit dem neu gewonnenen Wert kann dann auf einen aktuellen Zustand der Maschine rückgeschlossen werden. Beispielsweise kann erkannt werden, ob sich die Maschine (noch) in einem ordnungsgemäßen Zustand für den bestimmungsgemäßen Gebrauch befindet oder ob besondere Maßnahmen eingeleitet werden müssen, wie z.B. Anhalten der Maschine, Ausführung von Wartungsarbeiten, Reparatur etc. Selbstverständlich ist es auch möglich, die Veränderung des betreffenden Wertes über der Zeit zu erfassen und auch daraus besondere Rückschlüsse auf den Zustand der Maschine zu ziehen, z.B. Unterscheidung zwischen normalem Verschleiß und Defekt.

Zusammenfassend ergeben sich aus dem erfindungsgemäßen Condition-Monitoring die Vorteile,
- dass sämtliche Anregungsfrequenzen für das Verhalten einer Achse betracht werden (vollständige Frequenzgangsanalyse statt Aufnahme des Zeitverhaltens),
- dass das Verhalten sowohl der Achsen für sich als auch während eines Bearbeitungsprozesses analysiert wird,
- dass das Verfahren in der regulären Haupt- oder Nebenzeit der Bearbeitung ausgeführt werden kann, und damit eine zusätzliche Maschinenbelegungszeit (Nebenzeit) nicht zwingend erforderlich ist,
- dass das Verfahren eine modellbasierte Analyse der Ursachen für eine Abweichung vom ursprünglichen Verhalten erlaubt,
- dass das Verfahren im Vorfeld hinterlegtes Expertenwissen und eine automatische Auswertung benutzt, um ohne weitere Hinzuziehung von Expertenwissen während der Durchführung des Condition-Monitoring zielgerichtete Hinweise für die Wartung geben zu können.

Wenn das Condition-Monitoring im Frequenzbereich und nicht im Zeitbereich ausgeführt wird, können Veränderungen im Arbeitsprozess (z.B. stumpfes Werkzeug) oder im Antriebssystem (z.B. lose Kugelrollspindel) sicher erkannt werden.

Vorteilhaft müssen bei dem erfindungsgemäßen Verfahren keine speziellen Referenz-Verfahrprofile verwendet werden, sondern es können z.B. die im individuellen Teileprogramm programmierten Verfahrprofile herangezogen werden. Den programmierten Verfahrprofilen kann dabei optional ein zusätzliches Anregungssignal überlagert werden.

Bei dem erfindungsgemäßen Verfahren zum Condition-Monitoring kann zwischen Bearbeitung und Nicht-Bearbeitung unterschieden werden. Eine Unterscheidung ist z.B. über das Teileprogramm des Anwenders möglich. Die Auswertung der Daten während der Bearbeitung erlaubt eine Analyse des Bearbeitungsprozesses. Die Auswertung der Daten der Nicht-Bearbeitung erlaubt eine Analyse der Antriebssysteme der Maschine. Während der Bearbeitung kommt es in der Regel zu einer genügend großen Anregung im Frequenzbereich durch den Bearbeitungsprozess. Die während der Bearbeitung aufgenommenen Achsdaten können für eine Analyse des Antriebsverhaltens verwendet werden. Führt die Maschine hingegen lediglich Positioniervorgänge ohne Bearbeitung aus (Nicht-Bearbeitung), so kann diesen Bewegungen problemlos ein zusätzliches Rauschsignal überlagert werden, um die Frequenzgang-Analyse sicher auszuführen.

Bei der Durchführung des Condition-Monitoring des Antriebssystems ohne Bearbeitung wird der Soll-Bewegung gegebenenfalls zusätzlich ein Rauschsignal überlagert, um die Anregung für die Analyse zu verstärken.

## Patentansprüche

1. Verfahren zum Condition-Monitoring einer programmgesteuerten Maschine, insbesondere einer Produktions- oder Werkzeugmaschine, mit folgenden Schritten:
- Bereitstellen eines dynamischen Modells der Maschine oder eines dynamischen Modells eines Teils der Maschine, welches mehrere Komponenten der Maschine umfasst, wobei das dynamische Modell in Form eines Feder-Dämpfer-Masse-Modells als Modell-Parameter Massenträgheiten, Federsteifigkeiten und Dämpfungswerte umfasst,
- Durchführen einer Frequenzanalyse für die Maschine oder den Teil der Maschine,
- Bestimmen wenigstens eines neuen Wertes für wenigstens einen Modell-Parameters anhand der Frequenzanalyse,
- Vergleichen des neuen Wertes des Modell-Parameters mit einem ursprünglichen Wert des Modell-Parameters,
- Erkennen eines Zustandes der Maschine oder des Teils der Maschine anhand des Vergleichsergebnisses.

2. Verfahren nach Anspruch 1, wobei die Frequenzanalyse während der Ausführung eines Ablaufprogramms für den normalen Betrieb der Maschine erfolgt.

3. Verfahren nach Anspruch 1 oder 2, wobei die Frequenzanalyse während der Ausführung eines speziellen Messprogramms für eine Frequenzanalyse erfolgt.

4. Verfahren nach Anspruch 3, wobei das Messprogramm zeitgleich mit dem Ablaufprogramm ausgeführt wird.

5. Verfahren nach Anspruch 3 oder 4, wobei das Messprogramm ein Rauschsignal umfasst, mit dem die Maschine angeregt wird.

6. Verfahren nach einem der vorherigen Ansprüche, wobei die Frequenzanalyse kontinuierlich während des Betriebs der Maschine durchgeführt wird.

7. Verfahren nach einem der Ansprüche 1 bis 5, wobei die Frequenzanalyse zu bestimmten Zeitpunkten während des Betriebs der Maschine durchgeführt wird.

8. Verfahren nach einem der vorherigen Ansprüche, wobei das dynamische Modell in einer der Maschine fest zugeordneten Steuerung hinterlegt wird.

9. Verfahren nach einem der vorherigen Ansprüche, wobei das dynamische Modell in einem mit der Maschine über ein Netzwerk verbundenen zentralen Speicher zur Speicherung von Modellen für eine Vielzahl von Maschinen hinterlegt wird.

10. Verfahren nach einem der vorherigen Ansprüche, wobei die Frequenzanalyse und die Bestimmung des neuen Wertes des Modell-Parameters in einer der Maschine fest zugeordneten Steuerung erfolgen.

11. Verfahren nach einem der Ansprüche 1 bis 9, wobei die Frequenzanalyse und die Bestimmung des neuen Wertes des Modell-Parameters in einer mit der Maschine über ein Netzwerk verbundenen Recheneinrichtung erfolgen.

12. Verfahren nach einem der vorherigen Ansprüche, wobei die Frequenzanalyse und/oder die Bestimmung des neuen Wertes des Modell-Parameters zumindest teilweise im Frequenzbereich durchgeführt werden.

13. Verfahren nach einem der vorherigen Ansprüche, wobei für den neuen Wert des Modell-Parameters ein Vergleich von Werten für diesen Parameter zwischen baugleichen Maschinen erfolgt.

14. Steuerung für eine Maschine, insbesondere eine Produktions- oder Werkzeugmaschine, zur Durchführung eines Verfahrens nach einem der Ansprüche 1 bis 8 oder 10 oder 12-13.

## Claims

1. Method for the condition monitoring of a programcontrolled machine, in particular of a production machine or machine tool, having the follow steps:
- providing a dynamic model of the machine or a dynamic model of part of the machine, which comprises a number of components of the machine, wherein the dynamic model in the form of a spring-damper-mass model comprises mass inertias, spring rigidities and damping values as model parameters,
- performing a frequency analysis for the machine or part of the machine,
- determining at least one new value for at least one model parameter on the basis of the frequency analysis,
- comparing the new value of the model parameter with an original value of the model parameter,
- identifying a state of the machine or part of the machine on the basis of the comparison result.

2. Method according to claim 1, wherein the frequency analysis takes place during the execution of a sequence program for the normal operation of the machine.

3. Method according to claim 1 or 2, wherein the frequency analysis takes place during the execution of a special measurement program for a frequency analysis.

4. Method according to claim 3, wherein the measurement program is executed at the same time as the sequence program.

5. Method according to claim 3 or 4, wherein the measurement program comprises a noise signal, with which the machine is excited.

6. Method according to one of the preceding claims, wherein the frequency analysis is performed continuously during operation of the machine.

7. Method according to one of claims 1 to 5, wherein the frequency analysis is performed at certain times during operation of the machine.

8. Method according to one of the preceding claims, wherein the dynamic model is stored in a controller fixedly assigned to the machine.

9. Method according to one of the preceding claims, wherein the dynamic model is stored in a central memory, for storing models for a plurality of machines, connected to the machine by way of a network.

10. Method according to one of the preceding claims, wherein the frequency analysis and the determination of the new value of the model parameter take place in a controller fixedly assigned to the machine.

11. Method according to one of claims 1 to 9, wherein the frequency analysis and the determination of the new value of the model parameter take place in a computing facility connected to the machine by way of a network.

12. Method according to one of the preceding claims, wherein the frequency analysis and/or the determination of the new value of the model parameter are performed at least partially in the frequency range.

13. Method according to one of the preceding claims, wherein for the new value of the model parameter a comparison of values for this parameter takes place between machines of the same design.

14. Controller for a machine, in particular a production machine or machine tool, for performing a method according to one of claims 1 to 8, or 10, or 12-13.

## Revendications

1. Procédé de condition-monitoring d'une machine commandée par programme, notamment d'une machine de production ou d'une machine-outil, ayant les stades suivants :
- on se procure un modèle dynamique de la machine ou un modèle dynamique d'une partie de la machine, qui comprend plusieurs éléments de la machine, le modèle dynamique comprenant, sous la forme d'un modèle ressort-amortisseur-masse comme paramètres de modèle, des inerties de masse, des raideurs de ressort et des valeurs d'amortissement,
- on effectue une analyse fréquentielle pour la machine ou la partie de la machine,
- on détermine au moins une valeur nouvelle pour au moins un paramètre du modèle à l'aide de l'analyse fréquentielle,
- on compare la valeur nouvelle du paramètre du modèle à une valeur initiale du paramètre du modèle,
- on détecte un état de la machine ou de la partie de la machine à l'aide du résultat de la comparaison.

2. Procédé suivant la revendication 1, dans lequel l'analyse fréquentielle s'effectue pendant l'exécution d'un programme de déroulement pour le fonctionnement normal de la machine.

3. Procédé suivant la revendication 1 ou 2, dans lequel l'analyse fréquentielle s'effectue pendant l'exécution d'un programme de mesure spécial pour une analyse fréquentielle.

4. Procédé suivant la revendication 3, dans lequel on exécute le programme de mesure dans le même temps que le programme de déroulement.

5. Procédé suivant la revendication 3 ou 4, dans lequel le programme de mesure comprend un signal de bruit, par lequel la machine est excitée.

6. Procédé suivant l'une des revendications précédentes, dans lequel on effectue l'analyse fréquentielle en continu pendant le fonctionnement de la machine.

7. Procédé suivant l'une des revendications 1 à 5, dans lequel on effectue l'analyse fréquentielle à des instants déterminés pendant le fonctionnement de la machine.

8. Procédé suivant l'une des revendications précédentes, dans lequel on mémorise le modèle dynamique dans une commande associée de manière fixe à la machine.

9. Procédé suivant l'une des revendications précédentes, dans lequel on mémorise le modèle dynamique dans une mémoire centrale reliée à la machine par un réseau de mémorisation de modèle pour une pluralité de machines.

10. Procédé suivant l'une des revendications précédentes, dans lequel l'analyse fréquentielle et la détermination de la valeur nouvelle du paramètre du modèle s'effectuent dans une commande associée de manière fixe à la machine.

11. Procédé suivant l'une des revendications 1 à 9, dans lequel l'analyse fréquentielle et la détermination de la valeur nouvelle du paramètre du modèle s'effectuent dans un dispositif informatique relié à la machine, par un réseau.

12. Procédé suivant l'une des revendications précédentes, dans lequel on effectue l'analyse fréquentielle et/ou la détermination de la valeur nouvelle du paramètre du modèle, au moins en partie, dans le domaine de fréquences.

13. Procédé suivant l'une des revendications précédentes, dans lequel il s'effectue, pour la valeur nouvelle du paramètre du modèle, une comparaison de valeurs de ce paramètre entre des machines construites pareillement.

14. Commande pour une machine, notamment une machine de production ou une machine-outil, pour effectuer un procédé suivant l'une des revendications 1 à 8 ou 10 ou 12 à 13.
